# EUROPEAN PATENT SPECIFICATION

(11) **EP 4 359 190 B1**
(45) Date of publication and mention of the grant of the patent: **23.04.2025**
(21) Application number: 22737529.2
(22) Date of filing: 13.06.2022
(51) Int. Cl.: B29C 44/14, B29C 44/58, B29C 33/14, B29C 33/18, B29C 45/14, B62J 1/26

(54) **METHOD FOR MAKING A SUPPORT ELEMENT FOR THE HUMAN BODY, SUCH AS A SADDLE OF A VEHICLE, SUPPORT ELEMENT SO OBTAINED AND RELATIVE MOLDING UNIT**
VERFAHREN ZUM HERSTELLEN EINES STÜTZELEMENTS FÜR DEN MENSCHLICHEN KÖRPER, ZUM BEISPIEL EINES FAHRZEUGSATTELS, SO ERHALTENES STÜTZELEMENT UND RELATIVE FORMEINHEIT
PROCEDE DE FABRICATION D'UN ELEMENT DE SUPPORT POUR LE CORPS HUMAIN, TEL QU'UNE SELLE DE VEHICULE, ELEMENT DE SUPPORT AINSI OBTENU ET UNITE DE MOULAGE RELATIVE

(30) Priority: 25.06.2021 IT 202100016760
(43) Date of publication of application: 01.05.2024
(73) Proprietor: Selle Royal Group S.p.A., 36050 Pozzoleone (VI) (IT)
(72) Inventor: BIGOLIN, Barbara, 36050 Pozzoleone (Vicenza) (IT); MALFATTI, Marco, 36050 Pozzoleone (Vicenza) (IT)
(74) Representative: Feltrinelli, Secondo Andrea
(86) International application number: PCT/IB2022/055454
(87) International publication number: WO 2022/269407

(56) References cited:
- EP-A1- 3 132 907
- EP-A2- 0 952 072
- WO-A1-2005/051629
- WO-A1-2019/166900
- US-A- 3 833 454
- US-A- 4 715 916
- US-A- 4 860 415
- US-A- 4 873 036

## Description

### TECHNICAL FIELD OF THE INVENTION

The present invention relates to a method for the realisation of a support element for the human body, a support element thus obtained and a relative moulding unit.

### TECHNICAL BACKGROUND

In the field of support elements for the human body, such as saddles for vehicles, for example bicycles, it is known to make a padding, whether or not equipped with an external covering that wraps it at its external or visible surface, which padding - after being made - is constrained, for example by gluing, to an upper surface of a plastic support base, for example called "shell" or "felt" in bicycles. According to this specific example, a "fork" can be constrained to the plastic base at its lower surface in order to bind the saddle to a seatpost of a bicycle frame.

However, it often happens that the padding, once made, is extracted from the mould and only later bound, for example by gluing, to the plastic base. In this case, it can be difficult to connect these two elements, as the padding can lose its dimensional stability and can therefore be difficult to couple with the plastic base, which, conversely, has a well-defined shape and size.

At the same time, when the external covering is present, it may be difficult to carry out the necessary trimming phase, because the padding is made of a soft material, and trimming an element such as the external covering having no support points, but finding it necessary to work on a soft support (precisely the padding), may not be easy: the trimming tool may not find a sufficiently rigid and/or conformed guide to carry out quality work.

US4860415 A and US3833454 disclose related methods and moulding units for making seats.

There is also a method that makes it possible to obtain a bicycle saddle in which there is no need for gluing between the padding and the support base. Patent IT1207441, in the name of the same Applicant, describes a method for making a saddle whereby an external covering is placed over a cavity in a female part of a mould, to which it conforms by the use of vacuum means. A material is injected into the cavity where the external covering is placed, forming the padding of the saddle itself, and the mould is then closed with a male part. Due to the properties of the respective materials, the padding adheres to the external covering and also to a felt or support base, as the male part of the mould is shaped to house said felt.

In this case, therefore, the upper surface of the felt determines the lower surface of the padding, in the sense that these two surfaces are in contact with each other. At the next opening of the mould, a finished saddle is extracted, followed by the trimming of the excess part of the external covering.

It is therefore necessary to provide a method and support element that can compensate for the aforementioned shortcomings and thus enable a high quality product to be obtained, even when padding and support base are not coupled together immediately or in the same mould.

In addition, there is also a need for a mould that makes it possible to obtain the aforementioned advantages for the method just indicated.

### OBJECTS OF THE INVENTION

The object of the present invention is to overcome the drawbacks of the prior art.

A further purpose of the present invention is to provide a method for making a support element for the human body that is practical and possibly automatable.

Another object of the present invention is to provide a method for speeding up and making more precise the steps for obtaining a support element for the human body.

A further purpose of the present invention is to provide a method that is relatively inexpensive.

In accordance with one aspect of the invention, there is provided a method for making a support element according to claim 1.

Another object of the present invention is to provide a support element for the human body which is easily assembled.

A further object of the present invention is to provide a support element for the human body that is precise.

In accordance with an aspect of the invention there a support element for the human body according to claim 10 is provided.

Yet another object of the present invention is to provide a moulding unit that allows a support element, as mentioned above, to be made easily and quickly.

Another object of the present invention is to provide a moulding unit that ensures that a support element is obtained with higher quality and efficiency than traditional moulds. According to one aspect of the invention a moulding unit according to claim 20 is provided.

The dependent claims refer to preferred and advantageous examples of embodiments of the invention.

### BRIEF DESCRIPTION OF THE DRAWINGS

Other characteristics and advantages of the invention will be more evident from the disclosure of an example of an embodiment of the present invention, illustrated by way of example in the accompanying drawings:
- Figure 1 is a perspective view partially from above of a moulding unit according to the present invention in the open position;
- Figures 2 and 3 respectively illustrate a view partially from above of a rear detail of a first component of the moulding unit of Figure 1, and a view partially from above of the first component of the moulding unit of Figure 1, wherein, in the latter case, a structural component or support component according to the present invention is applied;
- Figure 4 illustrates a perspective view from below of a padding of a support element according to the present invention;
- Figure 5 shows a partial longitudinal sectional view of a fully assembled support element according to the present invention;
- Figure 6 illustrates a perspective view from above of a structural component or support component according to the present invention;
- Figure 7 illustrates a view from below of a support element padding according to the present invention at a non-final stage of its realisation;
- Figure 8 illustrates a partial side view of a support element according to the present invention in a final stage of its realisation;
- Figures 9 and 10 each show an automated step of the method according to the present invention;

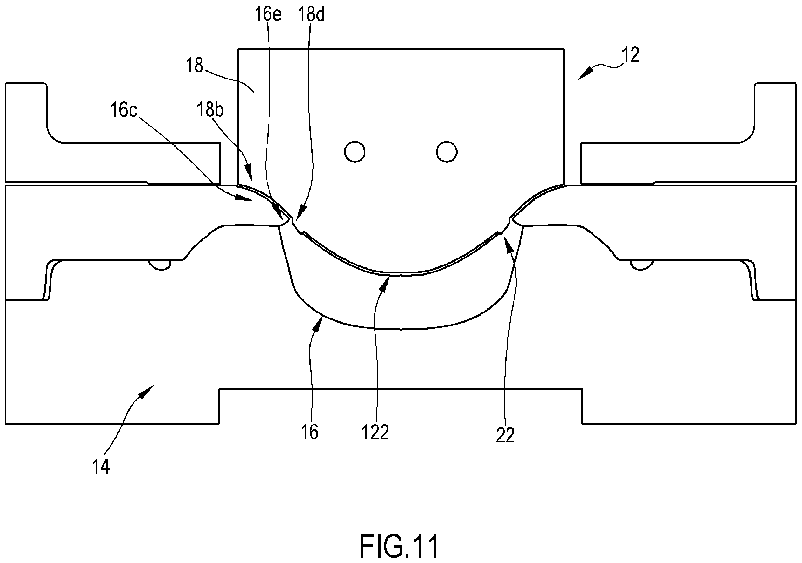

- Figure 11 illustrates a sectional view of a moulding unit according to the present invention in the closed position, wherein the section is taken along a transverse plane of the support element obtained therewith.

In the accompanying drawings, identical parts or components are distinguished by the same reference numerals.

### EMBODIMENTS OF THE INVENTION

The present invention relates to a method for making a support element for the human body, a support element, such as a vehicle saddle, for example a bicycle or motorcycle saddle, or a backrest or a seat or an armrest for anatomical chairs, or similar support elements, or a part thereof, etc., thus obtained and a relative moulding unit.

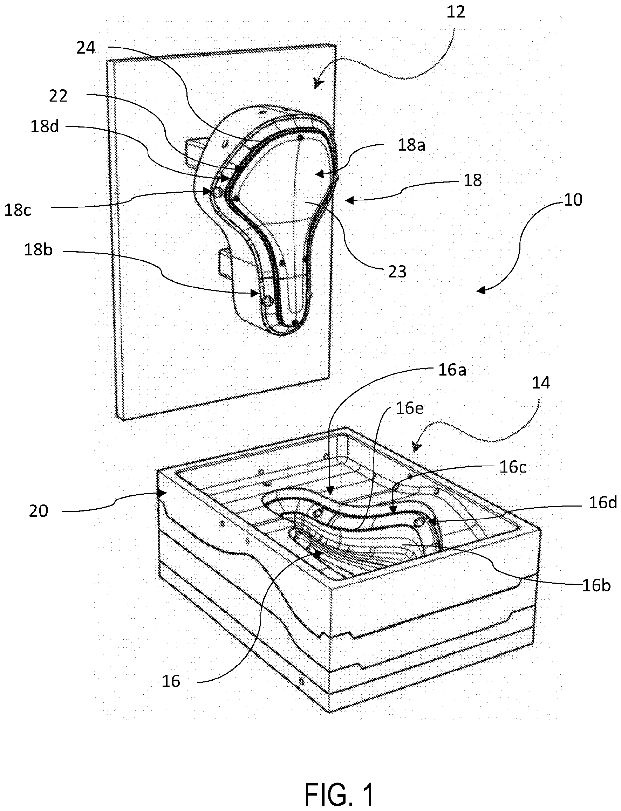

Figure 1 shows a moulding unit 10 according to the present invention, for the production of a support element for the human body.

More specifically, unit 10 comprises a first component 12 and a second component 14. The first component 12 is a punch element of the moulding unit 10 while the second component 14 is a die component of the moulding unit 10.

The first component 12 can be coupled to the second component 14. In particular, when the first component 12 is in abutment against the second component 14, the moulding unit 10 is in a closed operating configuration while when the first component 12 and the second component 14 are moved away from each other, the moulding unit is in an open operating configuration.

Means of approaching-removing the first component 12 with respect to the second component 14 (not shown in the Figures) are therefore provided, which are capable of moving the moulding unit 10 from the open to the closed operating configuration and vice versa, including all intermediate operating positions between open and closed.

Such approaching-removing means, generally known in the industry, may comprise an electric, pneumatic or other actuator designed to reciprocally approach and/or move the first component 12 and the second component 14 along a rectilinear or angular or rotational direction. This means that the first component 12 can be moved relative to the second component 14 along a predetermined rectilinear direction, or it can be moved angularly or rotating in approach-close or move away-open mode relative to the second component 14, and vice versa.

In Figure 1, the second component 14 is in a lower position than the first component 12. Different positions, however, can be contemplated.

In the present disclosure, the term "upper" refers to an element that, in use, is positioned above or higher, or is facing upwards; with the term "lower", on the other hand, refers to an element that, in use, is positioned below or lower, or is facing downwards or towards the ground.

The term "longitudinal" refers to a direction that extends along the longest part of an element while the term "transverse" refers to a direction that extends perpendicular to the longest part of an element, or from side to side thereof.

"Vertical" means a direction or a plane that in use goes from the bottom to the top while "horizontal" means a direction or a plane that, in use, is parallel to the ground.

The second component 14 comprises and/or delimits a cavity 16, suitable for use to house and/or to be filled with a material adapted to form a padding 114 of a support element 100. This material can be inserted, poured or injected into the cavity 16 and is capable of foaming and/or hardening and/or polymerising and/or solidifying within the cavity 16. The material is therefore a hardenable and/or polymerisable and/or solidifiable material. The cavity 16 is recessed relative to the second component 14 and is shaped substantially negatively with respect to the padding 114.

The cavity 16 is open at the top, in at least one first configuration or version of the invention. Thus, the cavity 16 has an opening 16a.

The cavity 16 is formed by a shaped surface 16b, in recess, and by a perimeter edge 16c, which defines the opening 16a.

The first component 12 includes a punch element 18. The punch element 18 is shaped in such a way as to abut against the cavity 16 and/or against its perimeter edge 16c, so as to determine the closure of the moulding unit 10 and/or of the cavity 16.

The punch element 18 rises from the first component 12. It comprises a shaped area 18a and an external profile 18b.

The external profile 18b corresponds to the perimeter edge 16c of the second component 14 and/or is adapted to come into contact with and/or abut against the perimeter edge 16c. At the external profile 18b of the punch element 18 there are abutment elements 18c, for example shaped like a peg or cylinder, which can be housed in appropriate and corresponding seats 16d arranged, for example, at the perimeter edge 16c of the cavity 16. The position of the abutment elements 18c and of the appropriate seats 16d are matched, so that when the first component 12 comes into abutment against the second component 14, the abutment elements 18c can be housed in the seats 16d. However, the position of the abutment elements 18c and that of the relative seats 16d can be reversed, without departing from the scope of the present invention, as defined by the claims.

The shaped surface 16b of the cavity 16 is defined by a first delimiting edge 16e. Similarly, the shaped area 18a of the punch element 18 is defined by a second delimiting edge 18d.

In the closed operating configuration, the first delimiting edge 16e and the second delimiting edge 18d abut each other.

The shaped surface 16b and the shaped area 18a determine the upper surface 116 and the lower surface 118 of the padding 114, respectively.

When the moulding unit 10 is in a closed operating phase, a padding 114 of the support element 100 is moulded.

The method according to the present invention is defined by Claim 1, thus comprises the following steps:
- providing a material adapted to make a padding 114,
- providing a support component 122,
- positioning the support component 122 at a punch element 18 of the first component 12 of the moulding unit 10,
- closing a cavity 16 of the second component 14 of the moulding unit 10 with the punch element 18, bringing the first component 12 closer to the second component 14 or vice versa, causing the support component 122 to face the cavity 16, determining for the moulding unit 10 a closing operating configuration,
- inserting and/or casting and/or injecting the material that constitutes the padding 114 into the cavity 16,
- hardening and/or polymerising and/or solidifying said material, obtaining a hardened and/or polymerised and/or solidified material that forms the padding 114, resulting in adhesion of the support component 122 to the padding 114,
- moving the first component 12 away from the second component 14 or vice versa, determining an open operating configuration for the moulding unit 10,
- extracting the padding 114 from the moulding unit 10.

In one version of the invention, the method may comprise the following steps:
- providing an external covering 120,
- positioning the external covering 120 at the cavity 16 and locking the external covering 120 in position,
- activating vacuum means so that the material of the external covering 120 adheres to a shaped surface 16b of the cavity 16, prior to the step of inserting and/or casting and/or injecting,
- optionally applying a primer or compatibilising agent to an internal face 120c of the external covering 120,
- trimming an excess portion 120a of the external covering 120, thereby obtaining a trimmed external covering.

The trimming step follows the step of hardening and/or polymerising and/or solidifying or the step of removing and/or the step of extracting.

When the external covering 120 is present, the padding material 114 is positioned in the cavity 16 after the step of positioning the external covering and is brought into contact with the external covering 120 itself.

The step of locking the external covering 120 in place can be accomplished by locking an excess portion 120a of the external covering 120 by means, for example, of a retention plate 20, as better disclosed below.

According to a further version, the external covering 120 can be locked in position directly by the punch element 18, in abutment against the first component 12. In particular, the external profile 18b in abutment against the perimeter edge 16c of the second component 14 locks in place the excess portion 120a of the external covering 120. The trimming phase is swift, whether carried out manually, for example by means of a special trimming machine, or in an automated manner. Thanks to the support component 122, in fact, there is no surplus material to be trimmed, since the outermost edge 122c of the support component 122 is placed at a certain distance, for example about 5 mm, or a distance between 1 mm and 10 mm, from the trim edge 114a of the padding 114.

The trim edge 114a of the padding 114 is the edge that ideally separates the excess portion 120a of the external covering 120 from the portion thereof that is adhered to the upper surface 116 of the padding 114 itself.

The trim edge 114a is the edge along which trimming of the external covering 120 takes place.

Thus, the trim edge 114a of the padding 114, as will be better understood from the disclosure below, is determined in use by the contact between the first delimiting edge 16e and the second delimiting edge 18d of the cavity 16 and the punch element 18, respectively.

When a support base 150 is constrained to the padding 114, the trim edge 114a is placed inside with respect to the support base 150 and/or its outer perimeter profile 150a.

The step of hardening and/or polymerising and/or solidifying comprising a step of obtaining, at the lower surface 118 of the padding 114, an internal area 123 at which the support component 122 is adhered to the hardened and/or polymerised and/or solidified material, and an annular area 124, surrounding the internal area 123, comprising such hardened and/or polymerised and/or solidified material.

The internal area 123, in at least one version of the invention, is in recess with respect to the annular area 124.

The annular area 124 is obtained adjacent to the trim edge 114a, between the latter and the outermost edge 122c of the support component 122.

Subsequently, the method comprises a step of constraining a support base 150 at the support component 122 (and/or its external face 122b) and/or a lower surface 118 of the padding 114 (and/or at the annular area 124) to which the support component 122 is attached, wherein the step of constraining comprises a step of applying a glue or a gluing agent on a lower surface 118 of the padding 114 and on the support component 122 (and/or its external face 122b) and a step of gluing the support base 150 on said lower surface 118 and on the support component 122 or vice versa.

The glue or gluing agent may comprise a polyurethane-based compound, e.g. a two component polyurethane glue, etc. Other components may be provided according to the specific type of materials of the elements to be glued together.

The glue or gluing agent may also be applied several times, for example twice to the lower surface 118 of the padding 114, waiting a certain period of time between one application and the next. This can be especially useful when the glue is applied, for example, by a brush or similar tool, while it may not be necessary if the glued is sprayed on.

The method according to the present invention may comprise the steps of preparing and/or washing and/or degreasing at least an upper surface of the support base 150, so that it can accommodate the glue or gluing agent and thus bind to the lower surface 118 of the padding 114 and/or to the support component 122.

The method according to the present invention may also comprise steps of preparing and/or washing at least the lower surface 118 of the padding 114. For example, such steps are performed prior to that of applying the glue or gluing agent.

The washing steps can be carried out with special washing substances, including chemical-based ones, in order to prepare the treated and/or washed surfaces. In this way, the washing substance can lead to the breakage of double bonds present in the hardened and/or polymerised and/or solidified material of the padding 114.

A primer and/or a compatibilising agent may be applied to the upper surface of the support base 150 in order to facilitate constraining and/or gluing to the padding 114 and/or the support component 122.

This facilitates the constraint of the support base 150 with the padding 114 itself.

The adhesion of the support component 122 to the material that achieves the padding 114 is, in at least one version of the invention, determined by the chemical affinity between the two materials and/or results from the reaction of hardening and/or polymerisation and/or solidification of the material that achieves the padding, a reaction that takes place near the support component 122 itself.

In an alternative version, it would be possible for the step of adhesion of the support component 122 to the padding 114 to be aided by the application, on an internal face 122a of the support component 122, of a suitable compatibilising and/or adjuvant agent and/or glue.

The step of constraining the support base 150 at the support component 122 and/or the lower surface 118 of the padding 114 to which the support component 122 is attached may also comprise applying a glue or gluing agent to an upper surface of the support base 150.

The step of constraining the support base 150 to the padding 114 may be carried out, for example, by means of a compression press machine, for example separate from the moulding unit 10 of the present invention.

According to an alternative version, the support base 150 can be constrained to a male component (not shown in the attached Figures) by appropriate engagement means. In the moulding unit 10, the male component is an alternative to the first component 12. In fact, once the padding 114 has been made, and after trimming the excess portion 120a of the external covering 120 (if necessary), the male component could be removably coupled to the second component 14, bringing the support base 150 in abutment against the lower surface 118 of the padding 114 and against the support component 122.

In this way, the constraint and/or bonding of the support base 150 with the padding 114 could take place through the use of this male component and thus substantially through a single moulding unit 10.

As a result of the present method, the support component 122 is flush with the lower surface 118 of the padding 114 and/or with the annular area 124. Therefore, and despite being made with a reduced thickness, in at least one version of the invention, the support component 122 does not protrude with respect to the padding material, the latter for example positioned at the annular area 124.

Thus, the support component 122 is placed in a sort of corresponding imprint or recessed area (the dimensions of which correspond to those of the support component 122 and its thickness), which is in fact formed by the internal area 123, which is determined in the padding 114.

In this way, in at least one version of the invention, the lower surface 118 of the padding 114, formed by the support component 122 and the annular area 124, is substantially without discontinuities or steps, once realised.

Thus, the support component 122 is to some extent embedded and/or inserted into the material forming the padding 114. This means that at least the internal face 122a of the support component 122, the one intended to come into contact with the padding 114, and the thickness of the support component 122, will be surrounded and in contact with the material of the padding 114. Conversely, an external face 122b of the support component 122, which is visible after the step of making the padding and which is adapted in use to be constrained and/or glued to the support base 150, is not in recess or projecting with respect to the material that constitutes the padding 114 and/or the annular area 124, but substantially planar and/or flush with it.

Thus, the external face 122b is at least partially not covered by the hardened and/or polymerised and/or solidified material that constitutes the padding 114.

This is also clear considering that the external face 122b of the support component 122 is the one in use which is in contact with the shaped area 18a of the punch element 18. In this way, therefore, the means that hold the support component 122 in position do not allow the passage, between the external face 122b and the shaped area 18a, of the material that constitutes the padding 114.

The method may also include a step of abrading the material of this annular area 124, so that the annular surface becomes rough and/or wrinkled and/or has a rough and/or wrinkled pattern.

In fact, as mentioned, it is possible that the material that makes up the padding 114 is at least superficially compact following hardening and/or polymerisation and/or solidification. This abrading step is capable of making the surface of the annular area 124 more absorbent of the glue or gluing agent required for the subsequent constraint of the support base 150. The abrading step, at least in one version of the invention, may open the chemical bonds of the material constituting the padding 114 and/or may mechanically roughen and/or wrinkle that area, so as to facilitate the gluing step.

The abrading step may be performed by milling and/or abrasion and/or scraping and/or removal and/or mechanical etching of the surface layer of said annular area 124.

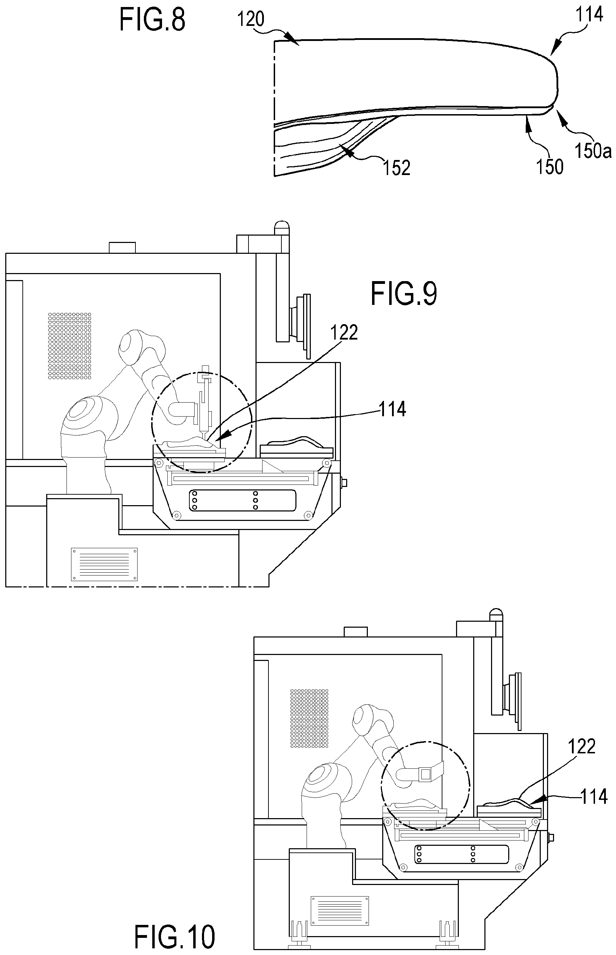

The method according to one version of the present invention can provide that at least one of its steps and/or at least the step of abrading and/or applying a glue or a gluing agent and/or trimming is automated and/or performed by a robot, for example anthropomorphic. This is another advantage conferred by the presence of the support component 122: its dimensional stability and consistency enable the padding 114, once made and with the support component 122 attached to its lower surface 118, to be positioned on a template or special tool. In this way, the steps of the method and/or the step of trimming the external covering 120 and/or the steps of preparing the padding 114, and/or the step of abrading (as visible in Figure 9) and/or the step of applying a glue or a gluing agent (as visible in Figure 10) are carried out automatically, for example by a robot, for example anthropomorphic, instead of manually.

The template or the appropriate tool has, for example, a shape corresponding in negative to that of the padding 114 and/or its upper surface 116, and/or comprises a vice and/or an undercut.

Finally, the step of constraining or gluing the padding 114 to the support base 150 can be performed by placing said elements or only one of them in an oven, for example convective, which brings the entire mass of said elements or only one of them to a temperature corresponding, for example, of about 50°C. Subsequently, a coupling, for example manual, and pressing of the two elements onto each other, takes place. In this way, in at least one version of the invention, the support element 100 will be ready for marketing, without the need for further finishing and/or cleaning steps.

The step of positioning the support component 122 onto the punch element 18 comprises a step of positioning and/or securing the support component 122 through retention means present on the punch element 18. Such retaining means comprise a containment rim 22 and/or retention means 30 and appropriate seats and/or holes 130 on the support component 122 itself, as further specified below.

According to a version of the invention, the support element 100 can have a hole, preferably a through hole, in a central and/or longitudinal area thereof. The hole may be circular or elongated. This is particularly useful when the support element 100 is a saddle for a vehicle, as such a hole may allow better ventilation or may provide pressure relief for the user at certain points, such as prostate or soft tissue points.

When such a hole is present, it can affect both the padding 114 and the support component 122. In particular, in the latter an opening is made, for example circular or elongated, during the preparation or moulding phase of the support component itself. With regard to the padding 114 and/or the external covering 120, this hole can be made, possibly at the opening provided on the support component, even after the step of making the padding itself. In this case, the method can comprise a step of making such a hole at the substantially central and/or longitudinal part of the external covering 120 and/or the padding 114, after the step of hardening and/or polymerisation and/or solidifying, or after the step of distancing, or after the step of extracting, possibly at the corresponding opening present in the support component 122. This can be performed, for example, by a pressure cutting element or by shearing or other similar methods.

According to a version of the invention, the padding 114 can comprise at least one insert. Such an insert can be made, for example, of a polyurethane material, and/or of a material having a different density with respect to the remaining material that constitutes the padding and/or in a material with different chemical and/or physical and/or mechanical properties with respect to the remaining material that constitutes the padding and/or in a material distinguishable by at least one property from the material that constitutes the rest of the padding 114. According to one version, such at least one insert may be made of a polyurethane gel or ethylene-vinyl acetate (EVA).

Such at least one insert may be positioned at the at least one area of the padding where it is desired to obtain a different density and/or mechanical properties than the rest of the padding, e.g. improved comfort, and/or improved cushioning and/or increased stiffness and/or firmness.

The method according to the present invention may therefore comprise a step of providing at least one insert and positioning such at least one insert internally proximate the external covering 120 and/or the support component 122.

The step of supplying the at least one insert may comprise either a step of supplying an already pre-shaped insert or a step of pouring a suitable material at the at least one area where such an insert is to be placed.

The support element 100 obtained with the method according to the present invention therefore comprises a padding 114, possibly comprising at least one insert, and a support component 122.

When the at least one insert is provided pre-shaped, it can be constrained, for example, to the internal face 122a of the support component 122, so that after the realisation of the padding 114 it is incorporated therein. The presence of such at least one insert, e.g. made of EVA, makes it possible to stiffen the material at the same time, both due to the intrinsic characteristics of such an insert and to the fact that, where it is present, the volume that can be occupied by the padding 114 is reduced and thus the same material will in fact be denser and/or less expansive and/or stiffer (compared to the same material that can be positioned in a larger volume). The at least one insert may, for example, be glued to the support component 122.

When the insert is poured, it may be poured into specific areas of the cavity 16, prior to the insertion of the material that will constitute the padding 114. In this case, a certain period of time can be allowed to elapse, for example to enable at least partially the polymerisation and/or hardening and/or solidification of the material of the at least one insert, so that the material that constitutes the padding does not invade the areas designated to the at least one insert and/or mix with the latter.

The support component 122 has a conformation substantially corresponding to that of the padding 114, but slightly smaller than the latter.

When the support element 100 is a saddle for a vehicle, such as a bicycle saddle, both the padding 114 and the support component 122 have a first portion, front or anterior in use, of substantially elongated conformation, and a second portion, rear in use, of substantially enlarged conformation. The first portion is connected to the second portion, as the overall conformation of the padding 114 and/or the support component 122 is substantially triangular, with rounded edges.

The flanks or side portions connecting the first portion to the second portion, according to at least one version of the invention, are at least slightly contoured, so as to present a kind of concavity (with a cavity facing outwards and to the side). Such shaping may, for example, facilitate pedalling by the user.

The support component 122 may be made of a composite material, e.g. a latex-impregnated cellulose agglomerate, such as the commercially available material Texon, and/or a synthetic material and/or a plastic and/or thermoplastic material, such as a material comprising or consisting of polyester and viscose, and/or a thermoformable material, and/or a rigid polyurethane or a soft polyurethane, etc.

The support component 122 is at least partially inserted and/or embedded in the hardened and/or polymerised and/or solidified material of the padding 114. This is except for its external face 122b.

In one version of the invention, the support component 122 is not made of a material such as a fabric or a mesh. Fabric or mesh, in general, do not provide the necessary stiffness desired with the support component 122 of the present invention. Moreover, the fabric or mesh - at least the traditional one - does not help to maintain the dimensions of the padding, does not provide a "guide" for trimming the external covering, and does not prevent dimensional shrinkage of the padding material itself.

The support component 122 is of a very slender thickness, in the order of a few millimetres or approximately 1 mm or less.

The support component 122 provides a certain "stiffness" to the padding 114. For example, the support component has a Young modulus stiffness of 500 to 3000 Mpa. The support component 122 is in fact stiffer than the material constituting the padding 114 and/or the material constituting the external covering 120.

The support component 122, in at least one version of the invention, has the same stiffness as the support base 150 but of a very reduced thickness compared to the latter.

The support component 122 may be produced, in a version of the invention, by a thermoforming process.

The support component 122 has two major faces, having substantially the same conformation as that of the support component itself. These major faces, in fact, are spaced from each other by the thickness of the support component which, as mentioned, is very thin.

The larger faces of the support component are an internal face 122a, adapted in use to be facing towards and/or constrained with the material of the padding 144, and an external face 122b, adapted in use to be facing towards and/or constrained with the support base 150.

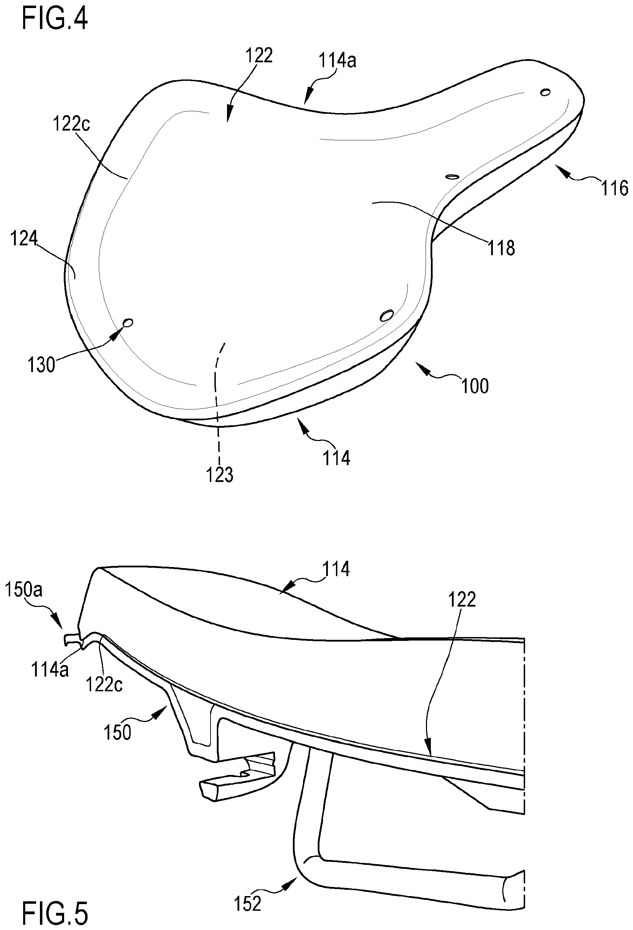

The support base 150 (for example visible in Figure 5 and Figure 8) may, for example, be made of a plastic and/or synthetic material such as, for example, polyamide, or a metallic or composite material.

At least one of the internal face 122a and external face 122b, preferably the one in external use 122b, is at least partially rough and/or includes unevenness, ripples, grooves and valleys that are more or less irregular or have been adjusted, etc. In this way, the support component 122, through its external face 122b having this particular pattern or texture, more easily retains the glue or the gluing agent that is used for the bonding with the support base 150 and/or is impregnated more easily by such glue or gluing agent. In this way, it is possible, for example, to avoid using a primer between the support component and the material that will constitute the support base 150.

The support element 100, in a version of the invention, can comprise at least one external covering 120. Such external covering 120 may be made of a plastic or natural material, such as a fabric, leather, imitation leather, a layer of compact and/or closed cell or foamed polyurethane material, a high density material, a synthetic and/or polymeric material such as PVC or polyvinyl chloride, etc.

When the external covering 120 is present, a layer of primer or compatibilising agent, for example based on polyurethane and/or components thereof, may be present and/or applied to facilitate adhesion of the external covering 120 to the padding 114. In such a case, this layer is applied on a face 120c, in internal use, of the external covering 120, adapted to be facing and/or constrained with the upper surface 116 of the padding 114. It is apparent that, when the external covering 120 is present, the upper surface 116 of the padding 114 is not external or accessible from the outside or by a user, as it is covered by the external covering 120 and/or constrained thereto.

The external covering 120 also has an external face 120b which, when present, is adapted to come into contact with the user and/or be visible from the outside.

The material constituting the padding 114 may include a foam, a self-skimming foam, a polyurethane foam, a printed insert, e.g. by means of a three-dimensional printer, a cushioning and/or comfort insert, etc. Such material is able to expand, in at least one version of the invention. Furthermore, in one version of the invention, such material can be inserted, poured or injected into the cavity 16 of the moulding unit 10 and is adapted to foam, harden and/or polymerise and/or solidify inside the cavity 16 itself.

As can be seen, the present invention therefore also relates to a support element for the human body obtainable by a method according to the present invention, wherein the support element 100 comprises the padding 114, the support component 122 and, optionally, the support base 150, wherein the padding 114 comprises a hardened and/or polymerised and/or solidified material to which the support component 122 is adhered. The support component 122 may be placed, in use, between the padding 114 and the support base 150, when the latter is present.

This support component 122 is adhered to the padding 114 and/or glued to the support base 150.

There may be an external covering 120, which covers at least partially or completely the padding 114.

In at least one version of the invention, the padding 114, with the support component 122 attached, constitutes a semi-finished assembly. In this case, therefore, it constitutes a part of a support element 100. In order to obtain the usable and/or complete support element 100, in fact, it is useful for the support base 150 also to be present. However, due to the presence of the support component 122, as mentioned above, the dimensional stability of the moulded padding 114 is maintained, which could then be sold as such or stored for later application of the support base 150.

Due to the presence of the support component 122, coupling operations between the padding 114 and the support base 150 take a few seconds, whereas in the absence of the support component, or by application of materials other than those listed here for the support component 122, coupling operations take up to a few minutes. Furthermore, in the absence of the support component 122, the operator's ability is decisive for a correct constraint with the support base. Conversely, this operation is also very easy for the operator when support component 122 is present.

The advantage of the support component 122 is also measured in terms of effectiveness during the trimming operation of the excess portion 120a of the external covering 120. In fact, the advantage lies in having a consistent and compact component - namely, the support component 122 - which facilitates the operator in carrying out this operation. The present invention also has as an object a moulding unit 10. This moulding unit 10 is adapted to be used for the method according to the present invention and/or for the realisation of the support element described above.

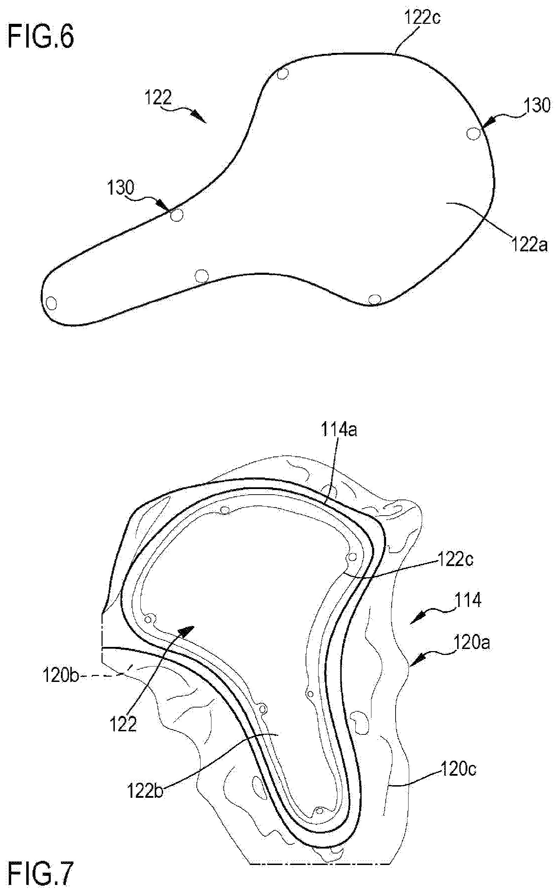

When the external covering 120 is present, the moulding unit 10 may comprise vacuum means and/or a special retention plate (e.g. indicated by 20 in Figure 1). The retention plate 20 is positioned above the cavity 16, so that, when the external covering is present, a layer of material adapted to make it is positioned at the cavity 16. The size of the external covering layer is larger than the size of the cavity so that, once positioned at the cavity 16, it can overlap with respect to the perimeter edge 16c and/or the first delimiting edge 16e of an excess portion 120a (visible for example in Figure 7).

The retention plate 20 locks the external covering 120 in place by pressing and constraining the excess portion 120a, then the vacuum means are actuated and the external covering 120 adheres to the moulded surface 16b, assuming the conformation of the latter. The retention plate 20 has a substantially annular surface and is provided with a through opening corresponding to the opening 16a of the cavity 16.

In particular, the outer covering has the external face 120b, adapted to come into contact with the cavity 16 and intended to constitute the outermost layer of the padding 114 in use, and the internal face 120c, adapted to come into contact with the padding material 114. The internal face 120c of the external covering 120 in use is not visible.

When the external covering 120 is not present, however, the material that constitutes the padding 114 is able independently to create a more compact film and/or with more closed and/or less expanded cells (compared to the material that will constitute the remaining part of the padding 114) in contact with the shaped surface 16b.

According to the invention, and as mentioned, the punch element 18 comprises retention means for the support component 122.

Such retention means, for example placed at the shaped area 18a of the punch element 18, may comprise a containment rim 22, adapted in use to contain and/or retain a support component 122 and/or retention means 30.

In one version of the invention, the rim 22 is able to prevent the material that constitutes the padding from passing through the rim itself and overlapping the external face 122b of the support component 122.

The containment rim 22 is internal with respect to the external profile 18b and/or the second delimiting edge 18d of the punch element 18. In fact, the external profile 18b has a larger size than the second delimiting edge 18d and/or the containment rim 22. According to one version of the invention, the containment rim 22 is located about 1 cm from the external profile 18b. Accordingly, the area enclosed by the containment rim 22 is smaller than the area enclosed by the second delimiting edge 18d, which corresponds to the shaped area 18a, which in turn is smaller than the area enclosed by the external profile 18b.

The containment rim 22, therefore, divides the shaped area 18a into an internal area 23 at the rim 22 and an annular area 24, surrounding the internal area 23.

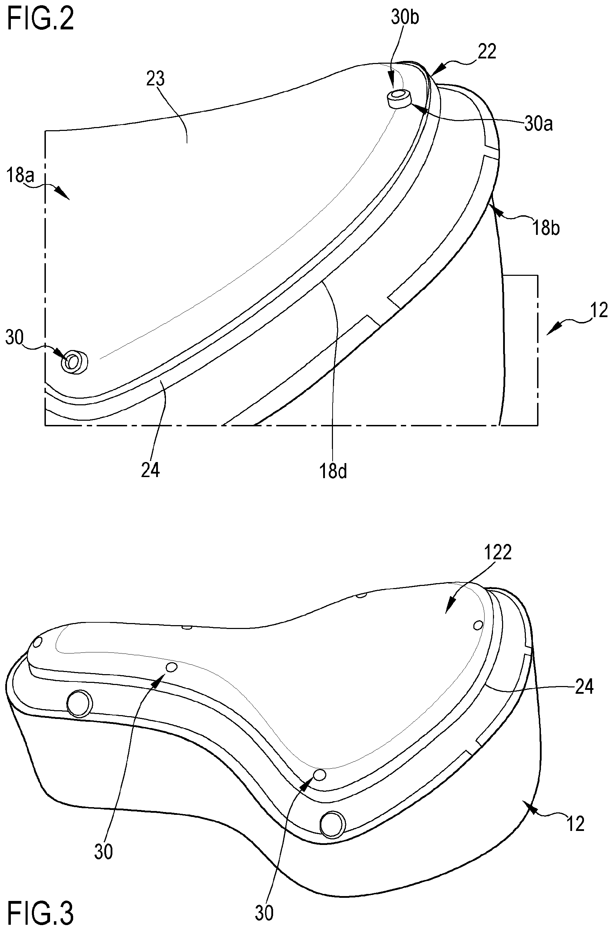

This containment rim 22 protrudes with respect to the shaped area 18a, as shown in Figure 2.

In an alternative version, not illustrated in the Figures, the containment rim 22 could be flush with the shaped area 18a and could enclose an internal area 23, recessed with respect to the shaped area 18a. The depth of the indentation of this internal area may correspond to the thickness of the support component 122. In such a case, the annular area 24 would also be flush with the rim 22. The rim 22, therefore, would be determined by the difference in depth between the internal area and the annular area.

The shaped area 18a, however, as visible, for example, in Figures 2 and 3, is shaped to correspond, as mentioned, to the lower surface 118 of the padding 114.

The internal area 23, therefore, determines the formation of most of the lower surface 118 of the padding 114 and/or of the internal area 123 while the annular area 24 determines the formation of the annular area 124 of the padding 114.

The annular area 24, as visible in Figures 2 and 3, therefore extends from the rim 22 to the second delimiting edge 18d of the punch element 18. It may be inclined outwards, for example downwards and outwards, away from the rim 22, according to the view in Figure 2.

This inclined surface can be straight or curved, with convexity towards the inside or towards the outside of the punch element 18.

As mentioned, in at least one version of the invention, the punch element 18 can comprise suitable retention means 30 of the support component 122, such as the coupling pins (visible in Figure 2).

Such retention means 30 can be shaped, for example, as a pin 30a, having a first end constrained or connected to the shaped area 18a and a second end or free end 30b, opposite the first end, having a section greater than that of the pin 30a.

The cross section of the peg 30a may be circular or polygonal. Similarly, the cross section of the free end 30b may be circular or polygonal.

The height of the peg 30a may be corresponding to or only slightly greater than the thickness of the support component 122.

Naturally, the retention means 30 can have any other form suitable for the purpose, without departing from the scope of protection of the present invention, as defined by the claims.

In an alternative version, there may be no retention means 30, as the support component may be held in position exclusively by the rim 22.

According to a further version of the invention, the retention means 30 could be present, but not the rim 22.

There could then be means for making the vacuum, adapted to hold the support component 122 in position on the punch element 18, in the presence or absence of the rim 22 and/or the retention means 30.

When the retention means 30 are present, the support component 122 will have special seats or special through holes 130 (for example visible in Figure 4 and Figure 6), having a circular or polygonal section adapted to allow the passage of the retention means itself and, at the same time, to retain the support component 122 on the punch element 18.

In one version of the invention, the retention means 30 are positioned at the shaped area 18a, or rather at the internal area 23, possibly in the vicinity of the annular area 24.

At the support base 150, when the support element 100 is a saddle for a vehicle, in particular, for example, for a bicycle, a fork 152, of a type known in the field, can be connected to the bicycle or vehicle frame.

In one version of the invention, the moulding unit 10 and/or at least the first component 12 is made of aluminium or other suitable metallic material.

The first component 12 and/or the second component 14 comprise a main plate from which the punch element 18 is raised and/or in which the cavity 16 is recessed respectively.

In the closing operating position of the moulding unit 10, the first component 12 and the second component 14 may also be in contact with the respective main plates. Therefore, a sealed condition (by means of special gaskets, if desired) is created for the cavity 16 with the punch element 18 or rather with its shaped area 18a.

Characteristics defined for one variant or embodiment may also be present for other variants or embodiments, unless explicitly provided otherwise.

Modifications and variants of the invention are possible within the scope of protection defined by the claims.

## Claims

1. Method for making a support element for the human body, such as a vehicle saddle, a bicycle or motorcycle saddle, a backrest or seat or armrest for an anatomical chair, or a similar support element, comprising the following steps:
- provide a material suitable for making a padding (114) of said support element (100),
- provide a support component (122), comprising an external face (122b) suitable in use to be constrained to a support base (150) of said support element,
- place said support component (122) at a punch element (18) of a first component (12) of a molding unit (10),
- insert and/or pour and/or inject said material into a cavity (16) of a second component (14) of said molding unit (10),
- close said cavity (16) with said punch element (18), bringing said first component (12) closer to said second component (14) or vice versa, bringing said support component (122) to face towards said cavity (16), determining for said molding unit (10) a closing operating configuration,
- harden and/or polymerize and/or solidify said material, obtaining a hardened and/or polymerized and/or solidified material which forms a padding (114), with consequent adhesion of said support component (122) to said padding (114), in which said support component (122) is at least partially inserted and/or embedded in said hardened and/or polymerized and/or solidified material of said padding (114), so that said external face (122b) of said support component (122) is at least partially not-covered by said hardened and/or polymerized and/or solidified material of said padding (114),
- move said first component (12) away from said second component (14) or vice versa, determining an open operating configuration for said molding unit (10),
- extract said padding (114) from said molding unit (10).

2. Method according to claim 1, wherein said method comprises:
- provide an external covering (120),
- place said external covering at said cavity (16) and lock said external covering (120) in position,
- activate vacuum means so that the material of said external covering (120) adheres to a shaped surface (16b) of said cavity (16), before said step of insert and/or pour and/or inject,
- trim an excess portion (120a) of said external covering (120), obtaining said external covering (120) trimmed, wherein said trim step follows said harden and/or polymerize and/or solidify step or to said move away step or to said extract step.

3. Method according to claim 1 or 2, comprising a step of constrain said support base (150) at said external face (122b) of said support component (122) and/or a lower surface (118) of said padding (114) to which said support component (122) is adhered, wherein said step of constrain comprises a step of apply a glue or a gluing agent on a lower surface (118) of said padding (114) and on said external face (122b) and a step of gluing said support base (150) on said lower surface (118) and on said external face (122b) or vice versa.

4. Method according to any one of the preceding claims, wherein said step of harden and/or polymerize and/or solidify comprises a step of obtain, at said lower surface (118) of said padding (114), an internal area (123) at which said support component (122) is adhered to said hardened and/or polymerized and/or solidified material, and an annular area (124), surrounding said internal area (123), comprising said hardened and/or polymerized and/or solidified material.

5. Method according to the preceding claim, comprising a step of abrade the surface of said annular area (124), so as to make it rough and/or wrinkled.

6. Method according to any one of the preceding claims, wherein at least one of said steps and/or at least said step of abrade and/or apply a glue or an adhesive agent and/or trim is automated and/or performed by a robot, for example anthropomorphic.

7. Method according to any one of the preceding claims, wherein said step of place said support component (122) comprises a step of position and/or fix said support component (122) on said punch element (18) through retention means (30) for said support component (122), which comprise for example a containment rim (22), suitable in use to contain and/or maintain said support component (122), and/or retention means (30) and suitable seats and/or holes (130) present in said support component (122).

8. Method according to any one of the preceding claims, comprising a step of make a hole at a substantially central and/or longitudinal part of said external covering (120) and/or of said padding (114), after said step of harden and/or polymerize and/or solidify, either after said step of move away, or after said step of extract, at a corresponding opening present in said support component (122).

9. Method according to any one of the preceding claims, comprising a step of provide at least one insert and place said at least one insert close to said external covering (120) and/or said support component (122), so as to obtain said padding (114) comprising said at least one insert.

10. Support element for the human body obtainable with a method according to one or more of the preceding claims, wherein said support element (100) is a saddle of a vehicle, a saddle for bicycles or motorcycles, a backrest or a seat or an armrest for an anatomical chair, or a similar support element, or a part thereof, comprising a padding (114), wherein said padding (114) comprises a hardened and/or polymerized and/or solidified material, **characterized in that** it comprises a support component (122), adhered to said padding (114), wherein said support component (122) is at least partially inserted and/or embedded in said hardened and/or polymerized and/or solidified material of said padding (114) and comprises an external face (122b) suitable in use to be constrained to a support base (150) of said support element.

11. Support element according to claim 10, comprising said support base (150), wherein said support component (122) is placed between said padding (114) and said support base (150) and/or wherein said support component (122) is adhered to said padding (114) and glued and/or constrained to said support base (150).

12. Support element according to claim 10 or 11, comprising an external covering (120), for example comprising a plastic or natural material, such as a fabric, a leather, an imitation leather, a layer of compact and/or closed-cell or expanded polyurethane material, a high-density material, a synthetic and/or polymeric material such as PVC or polyvinyl chloride, etc., wherein said external covering (120) at least partially or completely covers said padding (114) and/or wherein said external covering (120) is trimmed.

13. Support element according to one or more of claims 10 to 12, wherein said padding (114) comprises a trim edge (114a), wherein said trim edge (114a) is placed inside with respect to said support base (150) and/or with respect to its perimeter profile (150a).

14. Support element according to one or more of claims 10 to 13, wherein said padding (114) has a lower surface (118), suitable in use to be adhered to said support component (120) and to said support base (150).

15. Support element according to one or more of claims 10 to 14, wherein said padding (114) has a lower surface (118), in which said lower surface (118) comprises an internal area (123) at which said support component (122) is adhered to said hardened and/or polymerized and/or solidified material, and an annular area (124), surrounding said internal area (123), comprising said hardened and/or polymerized and/or solidified material, adapted in use to be adhered to said support base (150), and/or wherein said external face (122b) of said support component (122) is substantially coplanar and/or flush with said annular area (124).

16. Support element according to the preceding claim, in which said annular area (124) has a rough and/or wrinkled surface pattern.

17. Support element according to one or more of claims 10 to 16, wherein said support component (122) comprises a composite material, for example a cellulose agglomerate impregnated with latex, for example the material commercially called Texon, and/or a synthetic material and/or a plastic material, such as for example a material comprising or consisting of polyester and viscose, and/or a thermoformable material, and/or a rigid polyurethane or a soft polyurethane, etc., and/or in which said support component (122) has a greater stiffness than said hardened and/or polymerized and/or solidified material of said padding (114) and/or in which said support component (122) has a stiffness with Young's modulus included in the range 500- 3000 Mpa.

18. Support element according to one or more of claims 10 to 17, wherein said padding (114) and/or said hardened and/or polymerized and/or solidified material comprises a foam, a self-skinning foam, a polyurethane foam, a molded insert, for example by means of a three-dimensional printer, a cushioning and/or comfort insert, etc.

19. Support element according to one or more of claims 10 to 18, comprising at least one insert placed internally against said external covering (120) and/or said support component (122), so that said padding (114) comprises said at least one insert.

20. Molding unit for manufacturing a support element for the human body, such as a vehicle saddle, bicycle or motorcycle saddle, backrest or seat or armrest for an anatomical chair, or a similar support element, or a part thereof, comprising a padding (114), a support component (122) and, optionally, a support base (150), according to any one of the claims 10 to 19, wherein said molding unit (10) comprises:
a first component (12) equipped with a punch element (18),
a second component (14) equipped with a cavity (16), in which said cavity (16) has a shaped surface (16b) having a conformation substantially corresponding to that of said padding (114) and/or an external surface thereof (116) and able to house and/or be filled with a hardenable and/or polymerizable and/or solidifiable material suitable for forming said padding (114),
wherein said punch element (18) can be approached in use to said second component (14) and/or to said cavity (16) or vice versa, determining for said molding unit (10) a closing operating configuration,
**characterized in that** said punch element (18) has retaining means for said support component (122), wherein said retaining means for said support component (122) comprise a containment rim (22), adapted in use to contain and/or retain said support component (122) and/or retention means (30) shaped as coupling pins and/or means for making the vacuum adapted to hold said support component (122) in position on said punch element (18).

21. Molding unit according to the preceding claim, wherein said cavity (16) has an opening (16a) and a perimeter edge (16c) which delimits said opening (16a), and, when said molding unit (10) is in said closing operating configuration, said opening (16a) and/or said perimeter edge (16c) is in contact with said punch element (18), so that said cavity (16) is closed by said punch element (18).

22. Molding unit according to claim 20 or 21, wherein said punch element (18) rises from said first component (12) and/or comprises a shaped area (18a), substantially corresponding to a lower surface (118) of said padding (114), and an external profile (18b), in which said external profile (18b) abuts against said perimeter edge (16c) of said cavity (16).

23. Molding unit according to one or more of claims 20 to 22, comprising vacuum means and/or a retention plate (20), placed above said cavity (16), for holding in position, in use an external covering (120), adapted to externally cover at least part of said padding (114) externally, and/or for example for retaining an excess portion (120a) of said external covering (120), and/or wherein said retention plate (20) has a substantially annular surface and is provided with an opening corresponding to the opening (16a) of said cavity (16).

24. Molding unit according to one or more of claims 20 to 23, wherein said shaped surface (16b) of said cavity (16) is defined and/or delimited by a first delimiting edge (16e), said shaped area (18a) of said punch element (18) is defined and/or delimited by a second delimiting edge (18d), and/or in which, in said closing operating configuration of said molding unit (10), said first delimiting edge (6e) and said second delimiting edge (18d) are in abutment on each other.

25. Molding unit according to one or more of claims 22 to 24, wherein said containment rim (22) is internal with respect to said external profile (18b) and/or said second delimiting edge (18d) of said punch element (18) and/or in which said containment rim (22) subtends an internal area (23) of the shaped surface (18a) and/or in which between said containment rim (22) and said second delimiting edge (18d) an annular area (24) of the shaped surface (18a) is enclosed.

## Patentansprüche

1. Verfahren zur Herstellung eines Stützelements für den menschlichen Körper, wie beispielsweise eines Fahrzeugsattels, eines Fahrrad- oder Motorradsattels, einer Rückenlehne oder eines Sitzes oder einer Armlehne für einen anatomischen Stuhl, oder eines ähnlichen Stützelements, umfassend die folgenden Schritte:
- des Bereitstellens eines Materials, das zur Herstellung einer Polsterung (114) des besagten Stützelements (100) geeignet ist,
- des Bereitstellens einer Stützkomponente (122), umfassend eine äußere Fläche (122b), die bei Verwendung dazu geeignet ist, an einer Stützbasis (150) des besagten Stützelements festgehalten zu werden,
- des Anordnens der besagten Stützkomponente (122) an einem Stanzelement (18) einer ersten Komponente (12) einer Formeinheit (10),
- des Einsetzens und/oder Gießens und/oder Einspritzens des besagten Materials in eine Kavität (16) einer zweiten Komponente (14) der besagten Formeinheit (10),
- des Schließens der besagten Kavität (16) mit dem besagten Stanzelement (18), wobei die besagte erste Komponente (12) der besagten zweiten Komponente (14) angenähert wird oder umgekehrt, wobei die besagte Stützkomponente (122) der besagten Kavität (16) zugewandt wird, wobei für die besagte Formeinheit (10) eine schließende Betriebskonfiguration bestimmt wird,
- des Härtens und/oder Polymerisierens und/oder Verfestigens des besagten Materials, wobei ein gehärtetes und/oder polymerisiertes und/oder verfestigtes Material erhalten wird, das eine Polsterung (114) bildet, mit folgender Haftung der besagten Stützkomponente (122) an der besagten Polsterung (114), in der die besagte Stützkomponente (122) mindestens teilweise in das gehärtete und/oder polymerisierte und/oder verfestigte Material der besagten Polsterung (114) eingesetzt und/oder eingebettet ist, so dass die besagte äußere Fläche (122b) der besagten Stützkomponente (122) mindestens teilweise durch das besagte gehärtete und/oder polymerisierte und/oder verfestigte Material der besagten Polsterung (114) nicht bedeckt ist,
- des Wegbewegens der besagten ersten Komponente (12) von der besagten zweiten Komponente (14) oder umgekehrt, um eine offene Betriebskonfiguration für die besagte Formeinheit (10) zu bestimmen,
- des Herausziehens der besagten Polsterung (114) aus der besagten Formeinheit (10).

2. Verfahren nach Anspruch 1, worin das besagte Verfahren umfasst:
- das Bereitstellen einer äußeren Abdeckung (120),
- das Anordnen der besagten äußeren Abdeckung an der besagten Kavität (16) und das Verriegeln der besagten äußeren Abdeckung (120) in Position,
- das Aktivieren von Vakuummitteln, so dass das Material der besagten äußeren Abdeckung (120) vor dem besagten Schritt des Einsetzens und/oder Gießens und/oder Einspritzens an einer geformten Oberfläche (16b) der besagten Kavität (16) anhaftet,
- das Beschneiden eines überschüssigen Abschnitts (120a) der besagten äußeren Abdeckung (120), wobei die besagte äußere Abdeckung (120) beschnitten wird, worin der besagte Schritt des Beschneidens auf den besagten Schritt des Härtens und/oder Polymerisierens und/oder Verfestigens oder auf den besagten Schritt des Wegbewegens oder auf den besagten Schritt des Herausziehens folgt.

3. Verfahren nach Anspruch 1 oder 2, umfassend einen Schritt des Festhaltens der besagten Stützbasis (150) an der besagten äußeren Fläche (122b) der besagten Stützkomponente (122) und/oder einer unteren Oberfläche (118) der besagten Polsterung (114), an der die besagte Stützkomponente (122) anhaftet, worin der besagte Schritt des Festhaltens einen Schritt des Auftragens eines Klebstoffs oder eines Klebemittels auf eine untere Oberfläche (118) der besagten Polsterung (114) und auf die besagte äußere Fläche (122b) und einen Schritt des Klebens der besagten der Stützbasis (150) auf die besagte untere Oberfläche (118) und auf die besagte äußere Fläche (122b) oder umgekehrt umfasst.

4. Verfahren nach irgendeinem der vorangegangenen Ansprüche, worin der besagte Schritt des Härtens und/oder Polymerisierens und/oder Verfestigens einen Schritt des Erhaltens, an der besagten unteren Oberfläche (118) der besagten Polsterung (114), eines inneren Bereichs (123), an dem die besagte Stützkomponente (122) an dem besagten gehärteten und/oder polymerisierten und/oder verfestigten Material anhaftet, und eines ringförmigen Bereichs (124), umgebend den besagten inneren Bereich (123), umfassend das besagte gehärtete und/oder polymerisierte und/oder verfestigte Material, umfasst.

5. Verfahren nach dem vorangegangenen Anspruch, umfassend einen Schritt des Abschleifens der Oberfläche des besagten ringförmigen Bereichs (124), um sie rau und/oder faltig zu machen.

6. Verfahren nach irgendeinem der vorangegangenen Ansprüche, worin mindestens einer der besagten Schritte und/oder mindestens der besagte Schritt des Abschleifens und/oder des Auftragens eines Klebstoffs oder eines Klebemittels und/oder des Beschneidens automatisiert ist und/oder von einem Roboter, zum Beispiel eines anthropomorphen, durchgeführt wird.

7. Verfahren nach irgendeinem der vorangegangenen Ansprüche, worin der besagte Schritt des Anordnens der besagten Stützkomponente (122) einen Schritt des Positionierens und/oder Fixierens der besagten Stützkomponente (122) an dem besagten Stanzelement (18) durch Rückhaltemittel (30) für die besagte Stützkomponente (122) umfasst, die beispielsweise einen Aufnahmerand (22), der bei Verwendung geeignet ist, die besagte Stützkomponente (122) aufzunehmen und/oder zu halten, und/oder Rückhaltemittel (30) und geeignete Sitze und/oder Löcher (130) , die in der besagten Stützkomponente (122) vorhanden sind, umfassen.

8. Verfahren nach irgendeinem der vorangegangenen Ansprüche, umfassend einen Schritt des Herstellens eines Lochs an einem im Wesentlichen zentralen und/oder longitudinalen Teil der besagten äußeren Abdeckung (120) und/oder der besagten Polsterung (114), nach dem besagten Schritt des Härtens und/oder Polymerisierens und/oder Verfestigens, entweder nach dem besagten Schritt des Wegbewegens oder nach dem besagten Schritt des Herausziehens, an einer entsprechenden Öffnung, die in der besagten Stützkomponente (122) vorhanden ist.

9. Verfahren nach irgendeinem der vorangegangenen Ansprüche, umfassend einen Schritt des Bereitstellens mindestens einer Einlage und des Anordnens der besagten mindestens einen Einlage in der Nähe der besagten äußeren Abdeckung (120) und/oder der besagten Stützkomponente (122), um die besagte Polsterung (114), umfassend mindestens eine Einlage, zu erhalten.

10. Stützelement für den menschlichen Körper, erhältlich mit einem Verfahren nach einem oder mehreren der vorangegangenen Ansprüche, worin das besagte Stützelement (100) ein Sattel eines Fahrzeugs, ein Sattel für Fahrräder oder Motorräder, eine Rückenlehne oder ein Sitz oder eine Armlehne für einen anatomischen Stuhl oder ein ähnliches Stützelement oder ein Teil davon ist, umfassend eine Polsterung (114), worin die besagte Polsterung (114) ein gehärtetes und/oder polymerisiertes und/oder verfestigtes Material umfasst, **dadurch gekennzeichnet, dass** es eine Stützkomponente (122) umfasst, die an der besagten Polsterung (114) anhaftet, worin die besagte Stützkomponente (122) mindestens teilweise in das besagte gehärtete und/oder polymerisierte und/oder verfestigte Material der besagten Polsterung (114) eingesetzt und/oder eingebettet ist und eine äußere Fläche (122b) umfasst, die dazu geeignet ist, an einer Stützbasis (150) des besagten Stützelements festgehalten zu werden.

11. Stützelement nach Anspruch 10, umfassend die besagte Stützbasis (150), worin die besagte Stützkomponente (122) zwischen der besagten Polsterung (114) und der besagten Stützbasis (150) angeordnet ist und/oder worin die besagte Stützkomponente (122) an der besagten Polsterung (114) anhaftet und an der besagten Stützbasis (150) verklebt und/oder festgehalten wird.

12. Stützelement nach Anspruch 10 oder 11, umfassend eine äußere Abdeckung (120), zum Beispiel umfassend ein Kunststoff- oder Naturmaterial, wie beispielsweise ein Gewebe, ein Leder, ein Kunstleder, eine Schicht aus kompaktem und/oder geschlossenzelligem oder expandiertem Polyurethanmaterial, ein hochdichtes Material, ein synthetisches und/oder polymeres Material wie PVC oder Polyvinylchlorid, usw., worin die besagte äußere Abdeckung (120) mindestens teilweise oder vollständig die besagte Polsterung (114) bedeckt und/oder worin die besagte äußere Abdeckung (120) beschnitten ist.

13. Stützelement nach einem oder mehreren der Ansprüche 10 bis 12, worin die besagte Polsterung (114) eine Beschnittkante (114a) umfasst, worin die besagte Beschnittkante (114a) in Bezug auf die besagte Stützbasis (150) und/oder in Bezug auf ihr Umfangsprofil (150a) innen angeordnet ist.

14. Stützelement nach einem oder mehreren der Ansprüche 10 bis 13, worin die besagte Polsterung (114) eine untere Oberfläche (118) aufweist, die bei Verwendung geeignet ist, an die besagte Stützkomponente (120) und an die besagte Stützbasis (150) angehaftet zu werden.

15. Stützelement nach einem oder mehreren der Ansprüche 10 bis 14, worin die besagte Polsterung (114) eine untere Oberfläche (118) aufweist, in der die besagte untere Oberfläche (118) einen inneren Bereich (123), an dem die besagte Stützkomponente (122) an dem besagten gehärteten und/oder polymerisierten und/oder verfestigten Material anhaftet, und einen ringförmigen Bereich (124), umgebend den besagten inneren Bereich (123), umfassend das besagte gehärtete und/oder polymerisierte und/oder verfestigte Material, umfasst, das bei Verwendung so ausgelegt ist, dass es an der besagten Stützbasis (150) angehaftet wird, und/oder worin die besagte äußeren Fläche (122b) der besagten Stützkomponente (122) im Wesentlichen koplanar und/oder bündig mit dem besagten ringförmigen Bereich (124) ist.

16. Stützelement nach dem vorangegangenen Anspruch, in dem der besagte ringförmige Bereich (124) ein raues und/oder faltiges Oberflächenmuster aufweist.

17. Stützelement nach einem oder mehreren der Ansprüche 10 bis 16, worin die besagte Stützkomponente (122) ein Verbundmaterial, zum Beispiel ein mit Latex imprägniertes Cellulose-Agglomerat, zum Beispiel das im Handel als Texon bezeichnete Material, und/oder ein synthetisches Material und/oder ein Kunststoffmaterial, wie zum Beispiel ein Polyester und Viskose umfassendes oder daraus bestehendes Material, und/oder ein thermoformbares Material, und/oder ein starres Polyurethan oder ein weiches Polyurethan usw. umfasst, und/oder in dem die besagte Stützkomponente (122) eine größere Steifigkeit als das besagte gehärtete und/oder polymerisierte und/oder verfestigte Material der besagten Polsterung (114) aufweist und/oder in dem die besagte Stützkomponente (122) eine Steifigkeit mit einem Elastizitätsmodul im Bereich von 500 - 3000 MPa aufweist.

18. Stützelement nach einem oder mehreren der Ansprüche 10 bis 17, worin die besagte Polsterung (114) und/oder das besagte gehärtete und/oder polymerisierte und/oder verfestigte Material einen Schaumstoff, einen selbsthäutenden Schaumstoff, einen Polyurethan-Schaumstoff, eine geformte Einlage, zum Beispiel mittels eines dreidimensionalen Druckers, eine Polster- und/oder Komforteinlage, usw. umfasst.

19. Stützelement nach einem oder mehreren der Ansprüche 10 bis 18, umfassend mindestens eine Einlage, die innen gegen die besagte äußere Abdeckung (120) und/oder die besagte Stützkomponente (122) angeordnet ist, so dass die besagte Polsterung (114) die besagte mindestens eine Einlage umfasst.

20. Formeinheit zur Herstellung eines Stützelements für den menschlichen Körper, wie beispielsweise eines Fahrzeugsattels, eines Fahrrad- oder Motorradsattels, einer Rückenlehne oder eines Sitzes oder einer Armlehne für einen anatomischen Stuhl, oder eines ähnlichen Stützelements oder eines Teils davon, umfassend eine Polsterung (114), eine Stützkomponente (122) und. optional, eine Stützbasis (150), nach irgendeinem der vorangegangenen Ansprüche 10 bis 19, worin die besagte Formeinheit (10) umfasst:
eine erste Komponente (12), die mit einem Stanzelement (18) ausgestattet ist,
eine zweite Komponente (14), die mit einer Kavität (16) ausgestattet ist, in der der die besagte Kavität (16) eine geformte Oberfläche (16b) hat, die eine Gestaltung aufweist, die im Wesentlichen derjenigen der besagten Polsterung (114) und/oder einer äußeren Oberfläche davon (116) entspricht und in der Lage ist, ein härtbares und/oder polymerisierbares und/oder verfestigbares Material, das zur Bildung der besagten Polsterung (114) geeignet ist, aufzunehmen und/oder damit gefüllt zu werden,
worin das besagte Stanzelement (18) bei Verwendung an die besagte zweite Komponente (14) und/oder an die besagte Kavität (16) oder umgekehrt angenähert werden kann, wobei für die besagte Formeinheit (10) eine schließende Betriebskonfiguration bestimmt wird,
**dadurch gekennzeichnet, dass** das besagte Stanzelement (18) Haltemittel für die besagte Stützkomponente (122) hat, worin die besagten Haltemittel für die besagte Stützkomponente (122) einen Aufnahmerand (22), der bei Verwendung ausgelegt ist, um die besagte Stützkomponente (122) aufzunehmen und/oder zurückzuhalten, und/oder Rückhaltemittel (30), die als Kupplungsstifte geformt sind und/oder Mittel zur Herstellung des Vakuums umfassen, die ausgelegt sind,
um die besagte Stützkomponente (122) auf dem besagten Stanzelement (18) in Position zu halten.

21. Formeinheit nach dem vorangegangenen Anspruch, worin die besagte Kavität (16) eine Öffnung (16a) und eine Umfangskante (16c), die die besagte Öffnung (16a) begrenzt, aufweist und, wenn sich die besagte Formeinheit (10) in der schließenden Betriebskonfiguration befindet, die besagte Öffnung (16a) und/oder die besagte Umfangskante (16c) in Berührung mit dem besagten Stanzelement (18) ist, so dass die besagte Kavität (16) durch das besagte Stanzelement (18) geschlossen wird.

22. Formeinheit nach Anspruch 20 oder 21, worin das besagte Stanzelement (18) sich von der besagten ersten Komponente (12) erhebt und/oder einen geformten Bereich (18a), der im Wesentlichen einer unteren Oberfläche (118) der besagten Polsterung (114) entspricht, und ein äußeres Profil (18b), in dem das besagte äußere Profil (18b) an der besagten Umfangskante (16c) der besagten Kavität (16) anliegt, umfasst.

23. Formeinheit nach einem oder mehreren der Ansprüche 20 bis 22, umfassend Vakuummittel und/oder eine Rückhalteplatte (20), die über der besagten Kavität(16) angeordnet ist, um, bei Verwendung, eine äußere Abdeckung (120) in Position zu halten, die dazu ausgelegt ist, mindestens einen Teil der besagten Polsterung (114) außen abzudecken, und/oder um zum Beispiel einen überschüssigen Abschnitt (120a) der besagten äußeren Abdeckung (120) zurückzuhalten, und/oder worin die besagte Rückhalteplatte (20) eine im Wesentlichen ringförmige Oberfläche aufweist und mit einer Öffnung versehen ist, die der Öffnung (16a) der besagten Kavität (16) entspricht.

24. Formeinheit nach einem oder mehreren der Ansprüche 20 bis 23, worin die besagte geformte Oberfläche (16b) der besagten Kavität (16) durch eine erste Begrenzungskante (16e) definiert und/oder begrenzt ist, der besagte geformte Bereich (18a) des besagten Stanzelements (18) durch eine zweite Begrenzungskante (18d) definiert und/oder begrenzt ist, und/oder in der, in der besagten schließenden Betriebskonfiguration der besagten Formeinheit (10), die besagte erste Begrenzungskante (6e) und die besagte zweite Begrenzungskante (18d) aneinander anliegen.

25. Formeinheit nach einem oder mehreren der Ansprüche 22 bis 24, worin der besagte Aufnahmerand (22) in Bezug auf das besagte äußere Profil (18b) und/oder die besagte zweite Begrenzungskante (18d) des besagten Stanzelements (18) innen liegt und/oder in der der besagte Aufnahmerand (22) einen inneren Bereich (23) der geformten Oberfläche (18a) schneidet und/oder in der zwischen dem besagten Aufnahmerand (22) und der besagten zweiten Begrenzungskante (18d) ein ringförmiger Bereich (24) der geformten Oberfläche (18a) eingeschlossen ist.

## Revendications

1. Procédé de fabrication d'un élément de support pour le corps humain, tel qu'une selle de véhicule, une selle de bicyclette ou de motocyclette, un dossier ou un siège ou un accoudoir pour une chaise anatomique, ou un élément de support similaire, comprenant les étapes suivantes :
- fournir un matériau apte à la réalisation d'un rembourrage (114) dudit élément de support (100),
- fournir un composant de support (122), comprenant une face externe (122b) apte pendant l'utilisation à être contrainte à une base de support (150) dudit élément de support,
- placer ledit composant de support (122) sur un élément de poinçon (18) d'un premier composant (12) d'une unité de moulage (10),
- insérer et/ou verser et/ou injecter ledit matériau dans une cavité (16) d'un deuxième composant (14) de ladite unité de moulage (10),
- fermer ladite cavité (16) avec ledit élément de poinçon (18), en rapprochant ledit premier composant (12) dudit deuxième composant (14) ou vice versa, en ramenant ledit composant de support (122) face à ladite cavité (16), en déterminant pour ladite unité de moulage (10) une configuration de fonctionnement en fermeture,
- durcir et/ou polymériser et/ou solidifier ledit matériau, en obtenant un matériau durci et/ou polymérisé et/ou solidifié qui forme un rembourrage (114), avec adhérence conséquente dudit composant de support (122) audit rembourrage (114), dans lequel ledit composant de support (122) est au moins partiellement inséré et/ou noyé dans ledit matériau durci et/ou polymérisé et/ou solidifié dudit rembourrage (114), de sorte que ladite face externe (122b) dudit composant de support (122) ne soit au moins partiellement pas recouverte par ledit matériau durci et/ou polymérisé et/ou solidifié dudit rembourrage (114),
- éloigner ledit premier composant (12) dudit deuxième composant (14) ou vice versa, en déterminant une configuration de fonctionnement ouverte pour ladite unité de moulage (10),
- extraire ledit rembourrage (114) de ladite unité de moulage (10).

2. Procédé selon la revendication 1, ledit procédé comprenant les étapes suivantes :
- prévoir un revêtement extérieur (120),
- placer ledit revêtement extérieur au niveau de ladite cavité (16) et bloquer ledit revêtement extérieur (120) en position,
- activer des moyens de vide de sorte que le matériau dudit revêtement extérieur (120) adhère à une surface façonnée (16b) de ladite cavité (16), avant ladite étape d'insertion et/ou de coulée et/ou d'injection,
- rogner une partie excédentaire (120a) dudit revêtement extérieur (120), en obtenant ledit revêtement extérieur (120) rogné, ladite étape de rognage suivant ladite étape de durcissement et/ou de polymérisation et/ou de solidification ou ladite étape d'éloignement ou ladite étape d'extraction de celle-ci.

3. Procédé selon la revendication 1 ou 2, comprenant une étape de contrainte de ladite base de support (150) au niveau de ladite face externe (122b) dudit composant de support (122) et/ou d'une surface inférieure (118) dudit rembourrage (114) à laquelle ledit composant de support (122) adhère, dans lequel ladite étape de contrainte comprend une étape d'application d'une colle ou d'un agent de collage sur une surface inférieure (118) dudit rembourrage (114) et sur ladite face externe (122b) et une étape de collage de ladite base de support (150) sur ladite surface inférieure (118) et sur ladite face externe (122b) ou vice versa.

4. Procédé selon l'une quelconque des revendications précédentes, dans lequel ladite étape de durcissement et/ou de polymérisation et/ou de solidification comprend une étape consistant à obtenir, au niveau de ladite surface inférieure (118) dudit rembourrage (114), une zone interne (123) au niveau de laquelle ledit composant de support (122) est collé audit matériau durci et/ou polymérisé et/ou solidifié, et une zone annulaire (124), entourant ladite zone interne (123), comprenant ledit matériau durci et/ou polymérisé et/ou solidifié.

5. Procédé selon la revendication précédente, comprenant une étape consistant à abraser la surface de ladite zone annulaire (124), de manière à la rendre rugueuse et/ou ridée.

6. Procédé selon l'une quelconque des revendications précédentes, dans lequel au moins l'une desdites étapes et/ou au moins ladite étape d'abrasage et/ou d'application d'une colle ou d'un agent adhésif et/ou de rognage est automatisée et/ou réalisée par un robot, par exemple anthropomorphique.

7. Procédé selon l'une quelconque des revendications précédentes, dans lequel ladite étape de mise en place dudit composant de support (122) comprend une étape de positionnement et/ou de fixation dudit composant de support (122) sur ledit élément de poinçon (18) par des moyens de rétention (30) pour ledit composant de support (122), qui comprennent par exemple un anneau de confinement (22), apte à être utilisé pour contenir et/ou maintenir ledit composant de support (122), et/ou des moyens de rétention (30) et des sièges et/ou des trous (130) appropriés présents dans ledit composant de support (122).

8. Procédé selon l'une quelconque des revendications précédentes, comprenant une étape consistant à percer un trou au niveau d'une partie sensiblement centrale et/ou longitudinale dudit revêtement extérieur (120) et/ou dudit rembourrage (114), après ladite étape de durcissement et/ou de polymérisation et/ou de solidification, soit après ladite étape d'éloignement, soit après ladite étape d'extraction, à une ouverture correspondante présente dans ledit composant de support (122).

9. Procédé selon l'une quelconque des revendications précédentes, comprenant une étape consistant à fournir au moins un insert et à placer ledit au moins un insert à proximité dudit revêtement extérieur (120) et/ou dudit composant de support (122), de manière à obtenir ledit rembourrage (114) comprenant ledit au moins un insert.

10. Élément de support pour le corps humain pouvant être obtenu à l'aide d'un procédé selon l'une ou plusieurs des revendications précédentes, dans lequel ledit élément de support (100) est une selle d'un véhicule, une selle pour bicyclettes ou motocyclettes, un dossier ou un siège ou un accoudoir pour une chaise anatomique, ou un élément de support similaire, ou une partie de ceux-ci, comprenant un rembourrage (114), dans lequel ledit rembourrage (114) comprend un matériau durci et/ou polymérisé et/ou solidifié, **caractérisé en ce qu'**il comprend un composant de support (122), fait adhérer audit rembourrage (114), dans lequel ledit composant de support (122) est au moins partiellement inséré et/ou noyé dans ledit matériau durci et/ou polymérisé et/ou solidifié dudit rembourrage (114) et comprend une face externe (122b) apte pendant l'utilisation à être contrainte à une base de support (150) dudit élément de support.

11. Élément de support selon la revendication 10, comprenant ladite base de support (150), dans lequel ledit composant de support (122) est placé entre ledit rembourrage (114) et ladite base de support (150) et/ou dans lequel ledit composant de support (122) adhère audit rembourrage (114) et est collé et/ou contraint à ladite base de support (150).

12. Élément de support selon la revendication 10 ou 11, comprenant un revêtement extérieur (120), par exemple comprenant un matériau plastique ou naturel, tel qu'un tissu, un cuir, un similicuir, une couche de matériau polyuréthane compact et/ou à cellules fermées ou expansé, un matériau à haute densité, un matériau synthétique et/ou polymère tel que le PVC ou le chlorure de polyvinyle, etc., dans lequel ledit revêtement extérieur (120) recouvre au moins partiellement ou complètement ledit rembourrage (114) et/ou dans lequel ledit revêtement extérieur (120) est rogné.

13. Élément de support selon l'une ou plusieurs des revendications 10 à 12, dans lequel ledit rembourrage (114) comprend un bord rogné (114a), dans lequel ledit bord rogné (114a) est placé à l'intérieur par rapport à ladite base de support (150) et/ou par rapport à son profil périmétrique (150a).

14. Élément de support selon l'une ou plusieurs des revendications 10 à 13, dans lequel ledit rembourrage (114) présente une surface inférieure (118), apte pendant l'utilisation à adhérer audit composant de support (120) et à ladite base de support (150).

15. Élément de support selon l'une ou plusieurs des revendications 10 à 14, dans lequel ledit rembourrage (114) présente une surface inférieure (118), dans laquelle ladite surface inférieure (118) comprend une zone interne (123) au niveau de laquelle ledit composant de support (122) adhère audit matériau durci et/ou polymérisé et/ou solidifié, et une zone annulaire (124), entourant ladite zone interne (123), comprenant ledit matériau durci et/ou polymérisé et/ou solidifié, adapté pendant l'utilisation à adhérer à ladite base de support (150), et/ou dans lequel ladite face externe (122b) dudit composant de support (122) est sensiblement coplanaire et/ou affleurante avec ladite surface annulaire (124).

16. Élément de support selon la revendication précédente, dans lequel ladite zone annulaire (124) présente un motif de surface rugueux et/ou ridé.

17. Élément de support selon l'une ou plusieurs des revendications 10 à 16, dans lequel ledit composant de support (122) comprend un matériau composite, par exemple un aggloméré de cellulose imprégné de latex, par exemple le matériau commercialement appelé Texon, et/ou un matériau synthétique et/ou une matière plastique, comme par exemple un matériau comprenant ou composé de polyester et de viscose, et/ou un matériau thermoformable, et/ou un polyuréthane rigide ou un polyuréthane souple, etc., et/ou dans lequel ledit composant de support (122) présente une rigidité supérieure audit matériau durci et/ou polymérisé et/ou solidifié dudit rembourrage (114) et/ou dans lequel ledit composant de support (122) présente une rigidité avec le module de Young inclus dans la plage de 500 à 3000 Mpa.

18. Élément de support selon l'une ou plusieurs des revendications 10 à 17, dans lequel ledit rembourrage (114) et/ou ledit matériau durci et/ou polymérisé et/ou solidifié comprend une mousse, une mousse auto-décapante, une mousse de polyuréthane, un insert moulé, par exemple au moyen d'une imprimante tridimensionnelle, un insert de rembourrage et/ou de confort, etc.

19. Élément de support selon l'une ou plusieurs des revendications 10 à 18, comprenant au moins un insert placé à l'intérieur contre ledit revêtement extérieur (120) et/ou ledit composant de support (122), de sorte que ledit rembourrage (114) comprend au moins un insert.

20. Unité de moulage pour la fabrication d'un élément de support pour le corps humain, tel qu'une selle de véhicule, une selle de bicyclette ou de motocyclette, un dossier, un siège ou un accoudoir pour une chaise anatomique, ou un élément de support similaire, ou une partie de celui-ci, comprenant un rembourrage (114), un composant de support (122) et, éventuellement, une base de support (150), selon l'une quelconque des revendications 10 à 19, dans laquelle ladite unité de moulage (10) comprend :
un premier composant (12) équipé d'un élément de poinçon (18),
un deuxième composant (14) équipé d'une cavité (16), dans laquelle ladite cavité (16) présente une surface façonnée (16b) présentant une conformation correspondant sensiblement à celle dudit rembourrage (114) et/ou à une surface externe de celui-ci (116) et capable d'abriter et/ou d'être remplie d'un matériau durcissable et/ou polymérisable et/ou solidifiable apte à former ledit rembourrage (114),
dans lequel ledit élément de poinçon (18) peut être approché en utilisation dudit deuxième composant (14) et/ou de ladite cavité (16) ou vice versa, déterminant pour ladite unité de moulage (10) une configuration de fonctionnement en fermeture,
**caractérisé en ce que** ledit élément de poinçon (18) présente des moyens de retenue pour ledit composant de support (122), dans lequel lesdits moyens de retenue pour ledit composant de support (122) comprennent un anneau de confinement (22), adapté pendant l'utilisation à contenir et/ou retenir ledit composant de support (122) et/ou des moyens de rétention (30) en forme de goupilles d'accouplement et/ou des moyens de fabrication du vide adaptés à maintenir ledit composant de support (122) en position sur ledit élément de poinçon (18).

21. Unité de moulage selon la revendication précédente, dans laquelle ladite cavité (16) présente une ouverture (16a) et un bord périmétrique (16c) qui délimite ladite ouverture (16a), et, lorsque ladite unité de moulage (10) se trouve dans ladite configuration de fonctionnement en fermeture, ladite ouverture (16a) et/ou ledit bord périmétrique (16c) sont en contact avec ledit élément de poinçon (18), de sorte que ladite cavité (16) est fermée par ledit élément de poinçon (18).

22. Unité de moulage selon la revendication 20 ou 21, dans laquelle ledit élément de poinçon (18) s'élève dudit premier composant (12) et/ou comprend une zone façonnée (18a), correspondant sensiblement à une surface inférieure (118) dudit rembourrage (114), et un profil externe (18b), dans lequel ledit profil externe (18b) bute contre ledit bord périmétrique (16c) de ladite cavité (16).

23. Unité de moulage selon l'une ou plusieurs des revendications 20 à 22, comprenant des moyens de vide et/ou une plaque de rétention (20), placée au-dessus de ladite cavité (16), pour maintenir en position, en utilisation un revêtement extérieur (120), adapté à couvrir extérieurement au moins une partie dudit rembourrage (114) à l'extérieur, et/ou par exemple pour retenir une partie excédentaire (120a) dudit revêtement extérieur (120), et/ou dans lequel ladite plaque de rétention (20) présente une surface sensiblement annulaire et est pourvue d'une ouverture correspondant à l'ouverture (16a) de ladite cavité (16).

24. Unité de moulage selon l'une ou plusieurs des revendications 20 à 23, dans laquelle ladite surface façonnée (16b) de ladite cavité (16) est définie et/ou délimitée par un premier bord de délimitation (16e), ladite zone façonnée (18a) dudit élément de poinçon (18) est définie et/ou délimitée par un deuxième bord de délimitation (18d), et/ou dans laquelle, dans ladite configuration de fonctionnement en fermeture de ladite unité de moulage (10), ledit premier bord de délimitation (6e) et ledit deuxième bord de délimitation (18d) sont en butée l'un sur l'autre.

25. Unité de moulage selon l'une ou plusieurs des revendications 22 à 24, dans laquelle ledit anneau de confinement (22) est interne par rapport audit profil externe (18b) et/ou audit deuxième bord de délimitation (18d) dudit élément de poinçon (18) et/ou dans laquelle ledit anneau de confinement (22) sous-tend une zone interne (23) de la surface façonnée (18a) et/ou dans laquelle entre ledit bord de confinement (22) et ledit deuxième bord de délimitation (18d) une zone annulaire (24) de la surface façonnée (18a) est contenue.
